# EUROPÄISCHE PATENTSCHRIFT

(11) **EP 1 003 622 B1**
(45) Veröffentlichungstag und Bekanntmachung des Hinweises auf die Patenterteilung: **28.08.2002**
(21) Anmeldenummer: 98945046.5
(22) Anmeldetag: 24.07.1998
(51) Int. Cl.: B23K 11/11, B23K 11/30, B23K 1/00

(54) **FÜGEN VON ELEKTRISCH LEITFÄHIGEN TEILEN DURCH AUFHEIZEN MITTELS ELEKTRISCHEN STROMS**
ASSEMBLING ELECTROCONDUCTIVE PARTS BY ELECTRIC CURRENT HEATING
ASSEMBLAGE DE PIECES ELECTROCONDUCTRICES PAR CHAUFFAGE AU MOYEN D'UN COURANT ELECTRIQUE

(30) Priorität: 14.08.1997 DE 19735219; 22.12.1997 DE 19757394
(43) Veröffentlichungstag der Anmeldung: 31.05.2000
(73) Patentinhaber: Magna IHV Gesellschaft für Innenhochdruckverfahren MBH, 73441 Bopfingen (DE)
(72) Erfinder: TRUBERT, Franz, A-1080 Wien (AT)
(74) Vertreter: Kovac, Werner, Dipl.-Ing.
(86) Internationale Anmeldenummer: DE9802091
(87) Internationale Veröffentlichungsnummer: WO99008825

(56) Entgegenhaltungen:
- US-A- 2 045 523
- US-A- 3 462 577
- US-A- 4 876 430
- US-A- 5 126 527
- US-A- 5 229 568

## Beschreibung

Die Erfindung betrifft ein Verfahren zum Fügen von elektrisch leitfähigen Teilen für Fahrzeugbau, wobei die gefügten Teile eine elektrodenseitige freie Oberfläche und eine den Elektroden abgewandte Oberfläche aufweisen, durch Aufheizen mittels elektrischen Stroms, wobei Elektroden unterschiedlicher Polung von der gleichen Seite auf eine freie Oberfläche der zu verbindende Teile zugeführt werden und mindestens eines der zu verbindenden Teile berühren, Strom an die Elektroden angelegt wird und derart die leitfähigen Teile örtlich durch den Stromfluß von einer Elektrode zur anderen durch die zu verbindenden Teile örtlich erhitzt und verbunden werden, sowie die Verwendung einer Vorrichtung zur Durchführung des Verfahrens. Bisher sind schlecht auf der Unterseite für Elektroden zu kontaktierende elektrisch leitfähige Bauteile, insbesondere Hohlkörper wie lange, geschlossene Profile oder große Massivteile meist nur durch thermisches Verbinden mit Schweißzusatzwerkstoff, Lötmaterial oder dgl. verbindbar gewesen. Ein Nachteil dieser thermischen Verbindungsverfahren besteht darin, daß die zum Verbinden benötigte Wärme nicht punktuell aufgebracht werden kann. Somit werden die zu verbindenden Teile stärker erhitzt, als für den reinen Verbindungsvorgang Schweißen oder Löten notwendig und die Teile verlieren teilweise ihre Maßhaltigkeit oder aber das Material erleidet eine nachteilige Gefügeumformung bspw. bei kaltverfestigten Teilen, die aus Kalt-Umformverfahren stammen, wie dem weiter unten erläuterten Innenhochdruckumformverfahren. In extremen Fällen verliert das zu verbindende vorgeformte Teil seine Form und einen Teil seiner Festigkeit. Punktschweißen mit Laserpicker oder dergleichen hat wieder andere Nachteile. Das Innenhochdruckumformverfahren als solches ist bekannt. Unter dem erwähnten Innenhochdruckumformverfahren oder auch IHV-Verfahren wird hier das Verfahren verstanden, das beispielsweise im Industrieanzeiger Nr. 20 vom 9.3.1984 beschrieben worden ist oder auch in "Metallumformtechnik", Ausgabe 1D/91, Seite 15 ff: A. Ebbinghaus: Präzisionswerkstücke in Leichtbauweise, hergestellt durch Innenhochdruckumformen" oder auch Werkstoff und Betrieb 123 bis 243: A. Ebbinghaus: "Wirtschaftliches Konstruieren mit innenhochdruckumgeformten Präzisionswerkstücken" oder auch "Werkstoff und Betrieb 122, (1991), 11, (1989), Seite 933 bis 938. Nachfolgend wird zur Vermeidung von Wiederholungen auf die Offenbarung dieser Veröffentlichungen in vollem Umfang Bezug genommen. Das Verfahren wurde bisher für die Herstellung von verschiedenen geformten Hohlteilen, wie bzw. zur Herstellung von gebauten Nockenwellen zur Befestigung von Nocken an einem Rohr, zur Herstellung von hohlen Nockenwellen, zur Herstellung von Raumlenkerachsen aber auch zur Herstellung von Kraftfahrzeugrahmenteilen eingesetzt. Es liefert hochpräzise, kaltgeformte Formteile, die während des Umformens eine Kaltverfestigung erfahren haben und deren Faserverlauf - wie sich bei mikroskopischer Betrachtung von Schliffen feststellen läßt - im wesentlichen dem Verlauf der Außenkonturen des geformten Teils entspricht. Dadurch sind diese Teile im Verhältnis zu ihrer Stärke sehr fest bzw. leicht. Um das nachteilige Aufheizen insbesondere derart kaltverfestigter ganzer Teile zu vermeiden, konnte man auch Widerstandsschweißen einsetzen, da dort der zum Schweißen eingesetzte Strom punktuell zwischen zwei oder mehreren Elektroden aufheizt, wobei die Elektroden der einen Polung als "Schweißelektroden" bezeichnet werden und die Elektroden entgegengesetzter Polung als Gegenelektroden. Einseitiges indirektes Schweißen, bei dem ein Material mit sehr guter Leitfähigkeit (Gegenkupfer) unter die zu verbindenden Bleche gelegt wird, hat den Nachteil, daß der Schweißstrom dazu neigt, auszuwandern, so daß Schweißstellen an völlig anderen, als den erwünschten Stellen, entstehen. Aus der DE-AS 1108351 ist ein solches Verfahren zum Impulsschweißen bekannt geworden, bei dem die Schweißelektroden von einer Seite auf zu verbindende Teile zugeführt werden und auf der anderen Seite der zu verbindenden Teile eine Gegenelektrode, dort bspw. ein Flachkupferstreifen vorliegt, durch die dann der Schweißstrom verläuft. Aus der DD 155397 ist ein Verfahren zum Doppelpunkt-Widerstandsschweißen bekannt, das das Problem der Nebenschlußbildung durch Herstellung eines Bereichs mit erhöhtem elektrischen Widerstand zwischen den Elektroden zu lösen versucht. Das Vorsehen von Gegenelektroden ist aber bei geschlossenen Hohlteilen oder schlecht zugänglichen Unterseiten nicht möglich. jedoch ließ sich dieses Verfahren nur dann verfahrenssicher einsetzen, wenn die zu verbindenden Teile von zwei Seiten zugänglich waren. Daher traten - vor allem beim flächigen Verbinden von Hohlkörpern, langen geschlossenen Profilen oder großen Massivteilen mit anderen Teilen, wie bspw. Blechen, immer das Problem auf, daß aufgrund der Unzugänglichkeit der anderen Seite dieses günstige Verfahren nicht oder in nicht ausreichend reproduzierbarer Verfahrenssicherheit eingesetzt werden konnte, da große Wegstrecken zwischen den Elektroden zu überwinden waren, da sehr hohe Verbindungsströme benötigt wurden und/oder verstärkt Nebenschlüsse auftraten. Die entsprechenden Anlagen waren daher sehr groß und platzaufwendig. Aus der US 2, 045, 523 (FASSLER) ist ein Verfahren bekanntgeworden, bei dem einseitig Elektroden unterschiedlicher Polung auf übereinanderliegende Bleche aufgelegt, unter den Blechen ein leitfähiger Träger, durch den Stromfluß erfolgen kann, vorgesehen ist und sodann Strom an die Elektroden angelegt wird, um die Bleche örtlich zu erhitzen. Dabei dient der leitfähige Träger offensichtlich als eine Art Unterkupfer. Ferner traten bei diesen großen Anlagen oft Probleme mit der erzielbaren Schweißgüte auf, um so mehr, je größer die zu verschweißenden Teile sind und je eher Nebenschlüsse auftreten können.

Es ist daher Aufgabe der Erfindung, ein Verfahren zum Verbinden von Teilen durch Widerstandsschweißen zu schaffen, das auch bei Teilen einsetzbar ist, die nur von einer Seite leicht zugänglich sind. Die Aufgabe wird erfindungsgemäß durch ein Verfahren zum Fügen von elektrisch leitfähigen Teilen für Fahrzeugbau, wobei die gefügten Teile eine elektrodenseitige freie Oberfläche und eine den Elektroden abgewandte Oberfläche aufweisen, durch Aufheizen mittels elektrischen Stroms, wobei Elektroden unterschiedlicher Polung von der gleichen Seite auf eine freie Oberfläche der zu verbindende Teile zugeführt werden und mindestens eines der zu verbindenden Teile berühren, Strom an die Elektroden angelegt wird und derart die leitfähigen Teile örtlich durch den Stromfluß von einer Elektrode zur anderen durch die zu verbindenden Teile örtlich erhitzt und verbunden werden, wobei auf der Unterseite der zu verbindenden elektrisch leitfähigen Teile keine weitere leitfähige Schicht vorgesehen wird, gelöst. Ferner betrifft die Erfindung die Verwendung der Vorrichtung zur Durchführung des Verfahrens nach einem der vorhergehenden Ansprüche, mit: - mindestens zwei benachbart angeordneten Elektroden unterschiedlicher Polung, die voneinander isoliert sind und von der gleichen Seite auf zu verbindende Teile bewegbar sind; und - einer Spannungsversorgung zum Anlegen hoher Spannung/Stromstärken an die Elektroden. Vorteilhafte Weiterbildungen ergeben sich aus den abhängigen Ansprüchen. Zur Erhöhung der Schweißgüte kann ein gewisser Anpreßdruck auf die zu verbindenden Flächen/Teile aufgebracht werden, wodurch sich der elektrisch leitfähige Kontakt verbessert und höhere Schweißströme fließen können. Dabei können die Teile im aufgeheizten Bereich teilweise oder vollständig schmelzen oder ein Schweißhilfsmaterial oder Lot zum Schmelzen gebracht werden. Die Elektroden können, wie dem Fachmann auf dem Gebiet der elektrischen Schweißtechnik bekannt, in an sich bekannter Weise gekühlt werden. Bei Einsatz supraleitender Materialien, wie von Spezialkeramik, für die Elektroden kann selbstverständlich eine entsprechende Kühlung durch flüssiges Helium oder Stickstoff erfolgen. Das Verbinden der Teile kann auch unter Verwendung von - elektrisch leitfähigem - Lötmaterial zwischen den Teilen erfolgen, so daß es sich dann um ein Lötverfahren handelt. Dabei kann bspw. eine von einer oder mehreren dieselbe einschließenden Gegenelektroden umgeben sein, bspw. können die Gegenelektroden die Zentralelektrode ringförmig umschließen oder aber es können zwei Gegenelektroden eingesetzt werden, zwischen denen die Zentralelektrode angeordnet ist.

In den Fällen, in denen die Unterseite der zu verschweißenden Teile zugänglich ist, kann es günstig sein, ein Gegenmaterial größerer elektrischer Leitfähigkeit als die zu verbindenden Teile unter den zu verbindenden elektrisch leitfähigen Teilen auf der den Elektroden entgegengesetzten Oberfläche des Verbunds anzuordnen, um den Stromdurchgang durch die zu verbindenden Teile zu verbessern.

Falls die zu verbindenden Teile unterschiedliche elektrische Leitfähigkeit aufweisen, ist bevorzugt die Leitfähigkeit des Teils, das nicht mit den Elektroden in Kontakt steht, höher als die des Teils, das von den Elektroden kontaktiert wird.

Es ist sinnvoll, in mindestens einem der zu verbindenden Teile eine Öffnung zum Durchtritt einer Elektrode und Kontaktierung nur mit dem dahinterliegenden Gegenstand auszubilden, so daß über diese Elektrode an das untere Teil ein anderes Potential als an das obere Teil gelegt werden kann, so daß Strom zwischen beiden, ggf. auch Lötmaterial, fließt und dies örtlich zum Schweißen/Löten erhitzt. Es ist sinnvoll - falls die Materialstärke es zuläßt - das Verfahren so durchzuführen, daß eine Öffnung zum Durchtritt der einen Elektrode vor dem Aufbringen der Elektroden gebildet wird - bspw. durch Bohren, Stanzen, Schneiden od. dgl..

Eine erfindungsgemäße Vorrichtung zur Durchführung des Verfahrens nach einem der vorhergehenden Ansprüche weist mindestens zwei benachbart angeordnete Elektroden, die voneinander isoliert sind und von der gleichen Seite auf zu verbindende Teile zu bewegbar sind; und eine Spannungsversorgung zum Anlegen hoher Spannung/Stromstärken unterschiedlichen Potentials an die Elektroden verschiedener Polung auf.

Dabei kann diese Vorrichtung eine Einrichtung zur Herstellung von zum gegen den Kontakt mit den Öffnungswänden isolierten Durchtritt der inneren Elektrode geeigneten Öffnungen aufweisen.

Es ist sinnvoll, daß die Vorrichtung auch eine Einrichtung zur Ausübung von Druck auf die zu verbindenden elektrisch leitfähigen Teile während des Verbindens aufweist, da bei besserem Kontakt der beiden Teile ein besserer Stromfluß durch dieselben erfolgen kann. Diese Einrichtung kann bspw. durch eine oder mehrere Elektroden gebildet sein - falls die Unterseite der zu verbindenden elektrisch leitfähigen Teile zugänglich ist, kann sie aber auch - ) das leitfähige Gegenstück ("Unterkupfer") aufweisen, das dann mit den Elektroden zusammenwirkt.

Die Elektroden können dabei so ausgebildet sein, daß die mindestens Gegenelektrode die Zentralelektrode mindestens teilweise umschließt. Es können auch mehrere Gegenelektroden vorgesehen sein, die eine Zentralelektrode zumindest teilweise zwischen sich einschließen. Zwischen den Elektroden unterschiedlicher Polung kann sich ein Isoliermaterial befinden.

So kann bspw. eine Elektrode als Hohlkörper - bspw. als Hohlzylinder - ausgebildet sein, in dem die Gegenelektrode axial so bewegbar ist, daß sie ein durch eine Öffnung im oberen Teil zugänglichen Bereich des unteren Teils isoliert vom oberen Teil kontaktiert (bspw. indem vermieden wird, daß das obere Teil vom leitenden Elektrodenabschnitt berührt wird oder indem ein Kontakt nur mit einem elektrisch nichtleitenden Außenmantel der Elektrode stattfindet), und die anderen Elektrode das darunterliegende Teil kontaktiert und derart Spannungen unterschiedlicher Potentiale zwischen den beiden Teilen aufgebaut werden können.

Es ist sinnvoll, daß sich zwischen den Elektroden ein Isoliermaterial befindet., wie Luft, eine isolierendes Gas oder nichtleitendes und hochtemperaturbeständiges Kunststoffmaterial, wie Teflon oder aber auch Keramik. Es ist bevorzugt, daß dieses Isoliermaterial nicht nur elektrisch, sondern auch thermisch isoliert, um das Elektrodenmaterial zu schonen. Für viele Anwendungen ist es besonders vorteilhaft, daß die Innenelektrode durch Isoliermaterial außer an den Kontaktstellen überdeckt ist, bspw. eine Porzellan-, Kunststoff- oder sonstige isolierende Ummantelung aufweist, in der die Elektrode bewegbar ist, wobei der Elektrodenkontakt freiliegt

Es ist günstig, wenn in der Vorrichtung femer eine Einrichtung zur Herstellung von gegen den Kontakt mit den Öffnungswänden isolierten Durchtritt der inneren Elektrode geeigneten Öffnungen vorgesehen ist, wie eine Bohreinrichtung, eine Stanzeinrichtung, eine Schneideinrichtung, die nur das obere Teil oder aber auch beide Teile mit Öffnungen versieht, durch die dann das darunterliegende Teil zur Kontaktierung mit der Gegenelektrode zugänglich ist .

Eine bevorzugte Verwendung der Vorrichtung ist das Verbinden von Hohlteilen, geschlossenen Profilen oder großen und/oder dicken Gegenständen mit zumindest teilweise flächig anliegenden Blechen. So können Hohlkörper, geschlossene Profile oder Massivteile mit Blechen oder anderen Hohlteilen verbunden werden. Eine typische Anwendung ist die Verbindung von Trägerteilen im Fahrzeugbau, wobei darin auch Land-, Luft- und Wasserfahrzeuge enthalten sind, mit Blechen - ein typisches Einsatzgebiet ist die Verbindung zwischen Trägerteilen der Bodengruppe eines Automobils mit Blechen, wie Bodenblechen - es können aber auch im Flugzeugbau hohle Rohre mit Blechen verbunden werden od. dgl. Dem Fachmann sind entsprechende Anwendungen offensichtlich.

Aufgrund der extrem kurzen Stromwege von einer Elerktrode über die Schweißzone zur anderen Elektrode, die das erfindungsgemäße Verfahren bietet, erscheint es aber auch geeignet, in bestimmten Fällen, wo gute beidseitige Zugänglichkeit bestünde, das Punktschweißen mit Gegenelektrode durch das erfindungsgemäße Verfahren zu substituieren. Nämlich dort, wo Nebenschlüsse durch zu geringen Schweißpunktabstand drohen, oder wo Bleche mit sehr unterschiedlichen Wandstärken verschweißt werden sollen. Die Nebenschlußgefahren, die beim sog. Indirektschweißen (beide Elektroden auf der selben Seite, aber nicht koaxial) drohen, werden beim erfindungsgemäßen Verfahren stark vermindert oder vollständig ausgeschaltet

Die Erfindung wird nun nachfolgend anhand der beigefügten Zeichnung, die bevorzugte Ausführungsformen der Erfindung zeigt, auf die diese aber keineswegs beschränkt ist, näher erläutert. Hierbei zeigt
Fig. 1: eine mögliche Anordnung der Elektroden auf einer Kombination eines Hohlteils mit einem darüberliegenden Blech zum Verschweißen.
Fig. 2: einen Teilschnitt durch die Anordnung der Elektroden aus Fig. 1.
Fig. 3: eine weitere mögliche Anordnung der Elektroden zum Randverbinden zweier aufeinanderliegender Teile;
Fig. 4: einen Einsatz der erfindungsgemäßen Vorrichtung zum Verschweißen von ineinandergesteckten Hohlteilen;
Fig. 5: eine mögliche Anordnung der Elektroden auf einer Kombination eines Hohlteils mit einem darüberliegenden Blech zum Verschweißen.
Fig. 6: einen Teilschnitt durch die Anordnung der Elektroden aus Fig.5 und
Fig. 7: eine weitere mögliche Anordnung der Elektroden zum Randverbinden zweier aufeinanderliegender Teile.

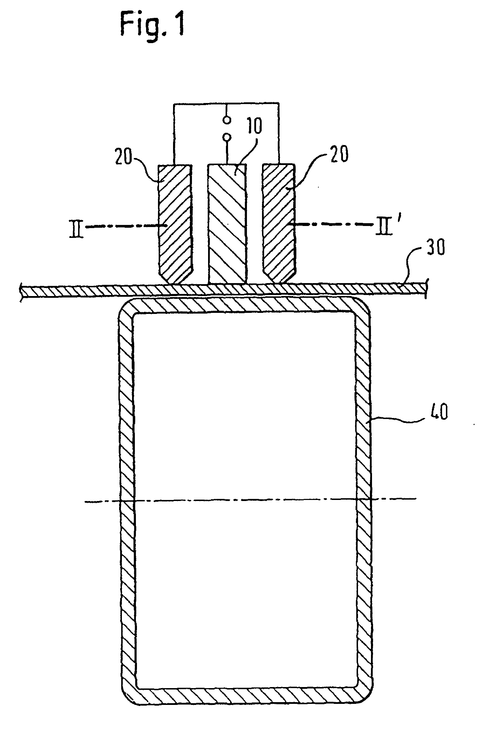

Wie in Fig. 1 dargestellt, kann das erfindungsgemäße Widerstandsverbinden zum Verbinden von Blechen und Hohlkörpern 40 mit Blech 30 eingesetzt werden. Hierbei wird bspw. ein 0,8 mm dickes ST37 Stahlblech an einen durch Innenhochdruckumformen hergestellten ST37-Hohlkörper 40 mit einer Wandstärke von 2, 5 mm in Schweißposition gelegt. Alle Elektroden 10, 20 werden mit der Außenoberfläche des obenliegenden Bleches 30 in elektrischen Kontakt gebracht., wobei die Innenelektrode von zwei Gegenelektroden 20, die hier kreisabschnittförmig ausgebildet sind - umgegeben ist. (selbstverständlich ist auch jede andere Anordnung möglich, durch welche die innere Elektrode von Gegenelektroden zum Vermeiden des Auswandems von Strom umgeben ist, ohne Kontakt mit der äußeren Elektrode zu bekommen). Hier wurde als Elektrodenmaterial eine Kupferlegierung, nämlich CuCr Zr eingesetzt, um optimale elektrische, aber auch thermische Leitfähigkeit bei guter Standzeit zu erzielen. Selbstverständlich können auch andere, dem Fachmann bekannte elektrisch gut leitfähige Materialien für die Elektroden eingesetzt werden. Nach Anlegen einer Schweißspannung an die Elektroden und Fluß des Schweißstroms durch die zu verbindenden Teile zwischen den unterschiedlich gepolten Elektroden in der Umgebung der Zentralelektrode wird nun ein Widerstandsschweißvorgang eingeleitet, wobei der Weg des Stromes nur in etwa dem Abstand Zentralelektrode/Gegenelektroden plus der Blechstärke entspricht. Hierbei kann zur Unterstützung des Schweißvorgangs axial Druck auf die Elektrode/n 20 aufgebracht werden. Dadurch können die zu verschweißenden Teile 30, 40 definiert und in gleichbleibender Qualität miteinander verbunden werden.

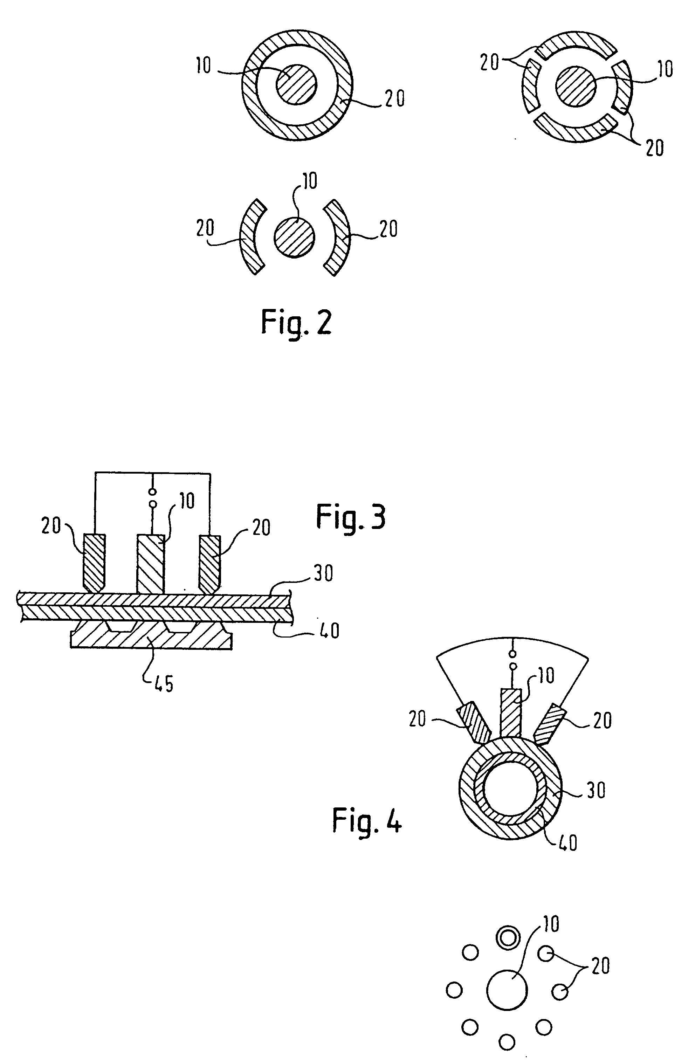

In Fig. 2 ist eine weitere mögliche Anordnung der Elektroden gezeigt. Hierbei handelt es sich um eine "Zentralelektrode" 10, um die zwei Gegenelektroden 20 als Teile eines Hohlzylinders ausgebildet sind. Hierbei ist es wichtig, daß der Vorschub der Elektroden 10, 20 variabel ist, damit Teile verschiedener Dicke miteinander verbunden erden können. Zwischen den Elektroden kann hierbei ein Isoliermaterial, wie z.B. Keramik, Porzellan od. dgl. angebracht sein, um einen unerwünschten Spannungsüberschlag zwischen den beiden Elektroden zu vermeiden. In den meisten Fällen reicht jedoch eine Isolierung durch Luft oder Gas aus. Entsprechende Materialien sind dem Fachmann geläufig.

In Fig. 3 ist eine weitere möglicher Anordnung der Elektroden gezeigt. Hierbei sollen zwei elektrisch leitfähige Teile in ihrem Randbereich miteinander verbunden werden. Hier können nun Gegen- und Zentralelektroden 10, 20 am Rand angeordnet werden und die Richtung des Stromflusses noch durch ein unter den Blechen aufgelegtes gut leitfähiges Material verbessert werden, so daß dadurch eine exakte und gute Verschweißung der Bleche im Randbereich nach Anlegen der Schweiß- oder Lötspannung (falls dazwischen ein Lötmaterial aufgebracht ist, kann nun wiederum der Verbindungsvorgang eingeleitet werden, wobei der vom Strom zurückzulegende Weg nur in etwa dem Abstand der beiden Elektroden 10, 20 plus der Materialdicke entspricht., erfolgt. Zwischen den beiden Elektroden kann wiederum bei Bedarf ein Isoliermaterial vorgesehen sein.

In Fig. 4 ist eine Anwendung des erfindungsgemäßen Verfahrens auf ineinandergesteckte Rohrteile gezeigt. Dabei werden die Zentralelektrode 10 sowie die beiden Gegenelektroden 20, die hier eine kleine Auflagefläche haben, auf das Außenrohr aufgebracht Der Schweißstrom fließt nun zwischen der Zentralelektrode und den Gegenelektroden unter Verbindung der beiden ineinandergesteckten Hohlteile.

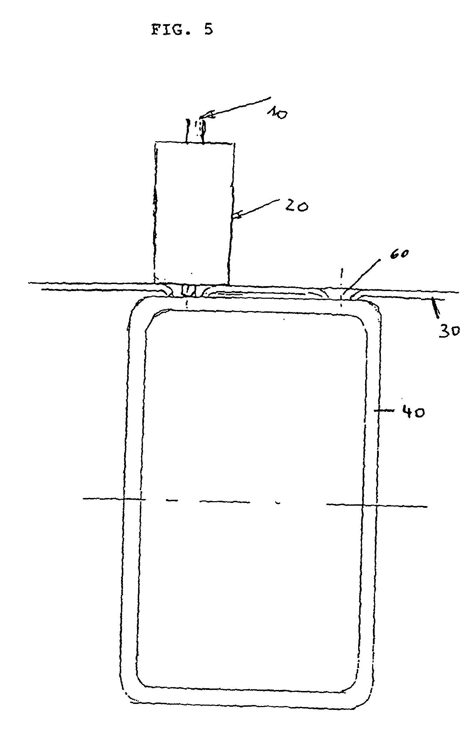

Wie in Fig.5 dargestellt, kann das erfindungsgemäße Widerstandsschweißenverbinden zum Verbinden von Hohlkörpern 40 mit Blech 30 eingesetzt werden. Hierbei wird das Blech mit oder ohne Aushalsung / Schweißbuckel gelocht und an den Hohlkörper 40 in Schweißposition gelegt. Durch das Loch 60 wird eine erste Elektrode 10 so eingeführt, daß sie die Außenoberfläche des dahinterliegenden Hohlteils 40 kontaktiert, ohne das darüberliegende Teil 30 zu berühren. Die zweite Elektrode 20, die hier als Hohlzylinder ausgebildet ist - (selbstverständlich ist auch jede andere Hohlform möglich, durch welche die innere Elektrode bewegt werden kann, ohne Kontakt mit der äußeren Elektrode zu bekommen), wird nun axial über die erste Elektrode 10 geschoben, bis sie Kontakt mit der Oberfläche des gelochten Blechteils 30 neben der Öffnung bekommt. Nach Anlegen der Schweißspannung an die Elektroden und Fluß des Schweißstroms durch die zu verbindenden Teile in der Umgebung des Lochs wird nun ein Widerstandsschweißvorgang eingeleitet, wobei der Weg des Stromes nur in etwa der Radiendifferenz der beiden Elektroden plus der Blechstärke entspricht. Hierbei kann zur Unterstützung des Schweißvorgangs axial Druck auf mindestens eine Elektrode/n 20 aufgebracht werden. Dadurch können die zu verschweißenden Teile 30, 40 definiert und in konstanter Qualität miteinander verbunden werden.

Es versteht sich von selbst, daß zwischen die zu verbindenden Teile auch ein Lot aufgebracht werden kann und diese Teile, je nach Bedarf und Ausgangsmaterial und Anforderungen an Verbindungstemperatur und Verbindungsart, auch verlötet werden können.

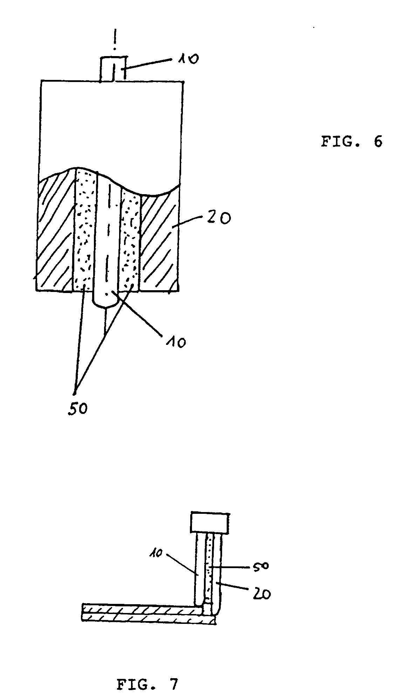

In Fig. 6 ist eine weitere mögliche Anordnung der Elektroden gezeigt. Hierbei handelt es sich um eine "Stabelektrode" 10, um die die zweite Elektrode 20 als Hohlzylinder ausgebildet ist. Hierbei ist es wichtig, daß der Vorschub der Elektroden 10, 20 variabel ist, damit Teile verschiedener Dicke miteinander verbunden werden können. Zwischen den Elektroden ist hierbei ein Isoliermaterial, wie z.B. Keramik, Porzellan od. dgl. angebracht, um einen unerwünschten Spannungsüberschlag zwischen den beiden Elektroden zu vermeiden. Entsprechende Materialien sind dem Fachmann geläufig.

In Fig. 7 ist eine weitere möglicher Anordnung der Elektroden gezeigt. Hierbei sollen zwei elektrisch leitfähige Teile bspw. in ihrem Randbereich miteinander verbunden werden. Vorteilhaft ist, wenn das "untere" elektrisch leitfähigeTeil das "obere" elektrisch leitfähige Teil etwas überragt. Nun kann die vordere Elektrode 10 auf das "obere" Teil aufgebracht und die hintere Elektrode 20 auf das "untere" Teil und nach Anlegen der Schweiß- oder Lötspannung (falls dazwischen ein Lötmaterial aufgebracht ist, kann nun wiederum der Verbindungsvorgang eingeleitet werden, wobei der vom Strom zurückzulegende Weg nur in etwa dem Abstand der beiden Elektroden 10, 20 plus der Materialdicke entspricht. Zwischen den beiden Elektroden sollte wiederum bei Bedarf ein Isoliermaterial vorgesehen sein.

Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung der Erfindung dienen.

## Patentansprüche

1. Verfahren zum Fügen von elektrisch leitfähigen Teilen (30, 40) für Fahrzeugbau, wobei die gefügten Teile eine elektrodenseitige freie Oberfläche und eine den Elektroden (10, 20) abgewandte Oberfläche aufweisen, durch Aufheizen mittels elektrischen Stroms, wobei Elektroden (10, 20) unterschiedlicher Polung von der gleichen Seite auf eine freie Oberfläche der zu verbindenen Teile (30, 40) zugeführt werden und mindestens eines der zu verbindenden Teile berühren, Strom an die Elektroden (10, 20) angelegt wird und derart die leitfähigen Teile örtlich durch den Stromfluß von einer Elektrode (10, 20) zur anderen durch die zu verbindenden Teile örtlich erhitzt und verbunden werden, **dadurch gekennzeichnet, daß** auf der Unterseite der zu verbindenden elektrisch leitfähigen Teile (30,40) keine weitere leitfähige Schicht vorgesehen wird.

2. Verfahren nach Anspruch 1, **dadurch gekennzeichnet, daß** das Verbinden unter Verwendung von Lötmaterial zwischen den Teilen (30, 40) erfolgt, das elektrisch leitfähig ist.

3. Verfahren nach Anspruch 1 oder 2, **dadurch gekennzeichnet, daß** in mindestens einem der zu verbindenden Teile (30, 40) eine Öffnung (60) zum Durchtritt einer Elektrode (20) vorgesehen ist.

4. Verfahren nach Anspruch 3, **dadurch gekennzeichnet, daß** die Öffnung (60) vor dem Aufbringen der Elektroden (20) gebildet wird.

5. Verwendung der Vorrichtung zur Durchführung des Verfahrens nach einem der vorhergehenden Ansprüche, mit:
- mindestens zwei benachbart angeordneten Elektroden unterschiedlicher Polung (10, 20), die voneinander isoliert sind und von der gleichen Seite auf zu verbindende Teile (30, 40) bewegbar sind; und
- einer Spannungsvorsorgung zum Anlegen hoher Spannung/Stromstärken an die Elektroden (10,20).

6. Verwendung nach Anspruch 5, **dadurch gekennzeichnet, daß** eine Gegenelektrode (20) hohl ausgebildet ist, so daß sie eine Zentralelektrode (10) mindestens teilweise einschließt.

7. Verwendung nach einem der vorangehenden Ansprüche 5 oder 6 **dadurch gekennzeichnet, daß** sich zumindest teilweise zwischen den Elektroden (10, 20) ein Isoliermaterial (50) befindet.

8. Verwendung nach einem der vorangehenden Ansprüche 5 bis 7, **dadurch gekennzeichnet, daß** sie ferner eine Einrichtung zur Herstellung von zum gegen elektrisch leitenden Kontakt mit den Öffnungswänden isolierten Durchtritt der inneren Elektrode geeigneten Öffnungen (60) im oberen elektrisch leitenden Teil des zu verbindenen Materials aufweist.

9. Verwendung nach einem der vorangehenden Ansprüche 5 bis 8, **dadurch gekennzeichnet, daß** sie eine Einrichtung zur Ausübung von Druck auf die zu verbindenen Teile (30, 40) während des Verbindens aufweist.

10. Verwendung nach Anspruch 9, **dadurch gekennzeichnet, daß** die Einrichtung zur Ausübung von Druck mindestens eine der beiden Elektroden (10,20) ist.

11. Verwendung nach Anspruch 5-10, **dadurch gekennzeichnet, daß** die Elektroden (10, 20) kühlbar sind.

12. Verwendung nach einem der vorangehenden Andprüch 5 bis 11 zum Verbinden von Hohlteilen, Rohren oder großen Gegenständen mit Blechen oder anderen Hohlteilen.

## Claims

1. Process for joining electrically conductive parts (30,40) of vehicle structures, the joined parts having a free surface on the side of the electrodes and a surface that is averted from the electrodes (10,20), by means of a heating process with electric current, whereby electrodes (10,20) of opposite polarity are adducted from the same side onto the free surface of the parts (30,40) to be joined and are in contact with at least one of the parts to be joined, electric current being applied to the elctrodes (10,20) so that the conductive parts are heated up locally and joined by the flow of electric current from one electrode (10,20) to the other (20,10) through the parts to be joined, **characterized in that** at the bottom side of the electrically conductive parts (30,40) to be joined no further conductive layer is provided.

2. Process as claimed in claim 1, **characterized by** the fact that the connecting process requires that solder be used between the parts (30,40), which solder is electrically conductive.

3. Process as claimed in claim 1 or 2, **characterized by** the fact that at least one of the parts (30,40) that is to be connected has an opening (60) through which the electrode (20) can be introduced.

4. Process as claimed in claim 3 or 4 [sic], **characterized by** the fact that the opening (60) is placed before the electrodes are applied.

5. Apparatus for carrying out the process as claimed in one of the above claims, **characterized by** the fact that it has:
at least two adjacent electrodes (10, 20) that are insulated and that are mobile from the same side of the parts that are to be connected (30, 40); and
a power supply for applying high voltages/currents to the electrodes (10, 20).

6. Apparatus as claimed in claim 5, **characterized by** the fact that one electrode (20) is hollow and encloses the central electrode (10) at least in part.

7. Apparatus as claimed in one of the above claims 6 or 7, **characterized by** the fact that there is insulating material (50) between at least part of the electrodes.

8. Apparatus as claimed in one of the above claims 5 through 7, **characterized by** the fact that it also has a device for making openings (60) in the other electrically conductive part of the material to be joined that are suitable for the introduction of the interior electrode (10) between insulated walls.

9. Apparatus as claimed in one of the above claims 5 through 8, **characterized by** the fact that it has a device for exerting pressure onto the parts that are to be connected (30, 40) during the connecting process.

10. Apparatus as claimed in claim 9, **characterized by** the fact that the device for exerting pressure is comprised of one of the two electrodes (10, 20).

11. Apparatus as claimed in one of the above claims 5 through 10, **characterized by** the fact that the electrodes (10,20) can be cooled.

12. Use of the apparatus as claimed in one of the above claims 5 through 11 for connecting hollow parts, tubes or large objects with sheet metal or other hollow parts..

## Revendications

1. Procédé d'assemblage de pièces électroconductrices (30, 40) pour la construction automobile, les pièces assemblées présentant une surface libre du côté des électrodes et une surface opposée aux électrodes (10, 20), en chauffant au moyen d'un courant électrique, dans lequel les électrodes (10, 20) de polarités différentes sont amenées du même côté sur une surface libre des pièces à solidariser (30, 40) et sont en contact avec moins l'une des pièces à solidariser, un courant est appliqué aux électrodes (10, 20) de façon à chauffer et solidariser les pièces conductrices localement au moyen du courant circulant d'une électrode à l'autre en traversant les pièces à solidariser, **caractérisé en ce qu'**aucune autre couche conductrice n'est prévue sur la face inférieure des pièces électroconductrices à solidariser (30, 40).

2. Procédé selon la revendication 1, **caractérisé en ce que** la liaison est effectuée en utilisant entre les pièces (30, 40) de la brasure qui est électroconductrice.

3. Procédé selon la revendication 1 ou 2, **caractérisé en ce qu'**une ouverture (60) est ménagée dans au moins une des pièces à solidariser (30, 40) en vue du passage d'une électrode (20).

4. Procédé selon la revendication 3, **caractérisé en ce que** l'ouverture (60) est ménagée avant de mettre en place les électrodes (20).

5. Utilisation du dispositif pour la mise en oeuvre du procédé selon l'une des revendications précédentes, avec :
- au moins deux électrodes adjacentes de polarités différentes (10, 20) qui sont isolées l'une de l'autre et qui sont mobiles du même côté pour venir sur des pièces à solidariser (30, 40) ; et
- une alimentation électrique pour appliquer une haute tension ou un courant de forte intensité aux électrodes (10, 20).

6. Utilisation selon la revendication 5, **caractérisée en ce qu'**une contre-électrode (20) est conformée pour être creuse, de façon à loger au moins partiellement une électrode centrale (10).

7. Utilisation selon l'une des revendications précédentes 5 ou 6, **caractérisée en ce qu'**un matériau isolant (50) se trouve au moins partiellement entre les électrodes (10, 20).

8. Utilisation selon l'une des revendications précédentes 5 à 7, **caractérisée en ce qu'**elle prévoit en outre un dispositif destiné à ménager des ouvertures (60) appropriées au passage de l'électrode intérieure dans la partie électroconductrice supérieure du matériau à assembler tout en réalisant une isolation électrique par rapport aux parois de l'ouverture.

9. Utilisation selon l'une des revendications précédentes 5 à 8, **caractérisée en ce qu'**elle comporte un dispositif pour exercer une pression sur les pièces à solidariser (30, 40) pendant l'assemblage.

10. Utilisation selon la revendication 9, **caractérisée en ce que** le dispositif pour exercer une pression est au moins l'une des deux électrodes (10, 20).

11. Utilisation selon l'une des revendications 5 à 10, **caractérisée en ce que** les électrodes (10, 20) peuvent être refroidies.

12. Utilisation selon l'une des revendications précédentes 5 à 11 en vue de solidariser des pièces, tubes, ou gros objets creux et des tôles ou autres pièces creuses.
